# EUROPÄISCHE PATENTSCHRIFT

(11) **EP 0 612 421 B1**
(45) Veröffentlichungstag und Bekanntmachung des Hinweises auf die Patenterteilung: **12.03.1997**
(21) Anmeldenummer: 92922585.2
(22) Anmeldetag: 02.11.1992
(51) Int. Cl.: G05B 19/05

(54) **SPEICHERPROGRAMMIERBARE STEUERUNG**
STORED-PROGRAM CONTROL
COMMANDE PAR PROGRAMME ENREGISTRE

(30) Priorität: 11.11.1991 DE 4137033
(43) Veröffentlichungstag der Anmeldung: 31.08.1994
(73) Patentinhaber: SIEMENS AKTIENGESELLSCHAFT, 80333 München (DE)
(72) Erfinder: HALLWIRTH, Volker, D-7742 St. Georgen (DE); HINSKEN, Gerhard, D-7600 Offenburg (DE)
(86) Internationale Anmeldenummer: DE9200916
(87) Internationale Veröffentlichungsnummer: WO9310487

(56) Entgegenhaltungen:
- EP-A- 0 174 230
- WO-A-88/10471
- WO-A-89/02099

## Beschreibung

Die Erfindung betrifft eine speicherprogrammierbare Steuerung gemäß dem Oberbegriff des Anspruchs 1.

Eine derartige speicherprogrammierbare Steuerung ist aus der PCT-Veröffentlichung WO 88/10471 bekannt. Diese weist mindestens einen Befehlsspeicher auf, in dem die Befehle für den Betrieb dieser Steuerung hinterlegt sind und der über mindestens ein Bussystem mit einem Wortprozessor für die Wortverarbeitung und mit einem Bitprozessor für die Bitverarbeitung verbunden ist. Mit dieser speicherprogrammierbaren Steuerung werden die Ergebnisse einer Analogsignalverarbeitung so aufbereitet, daß diese für den Bitprozessor für die Bitverarbeitung übernommen werden können. Dazu ist ein Decodierer vorgesehen, der eingangsseitig mit dem Befehlsspeicher und einem Flag-Register des Wortprozessors und ausgangsseitig mit dem Bitprozessor verbunden ist, wobei der Decodierer aus seinen Eingangssignalen, die aus üblichen Flag-Signalen zusammen mit den Flag-Signalen bewirkenden Befehlen gebildet werden, jeweils ein Zustandsbit in Form eines binären Kennsignals erzeugt, welches der Bitprozessor durch einen ihm zugewiesenen, im Befehlsspeicher hinterlegten Befehl am Ausgang des Decodierers abfragt. Mit dieser mit schaltungstechnischen Maßnahmen versehenen Steuerung ist es möglich, ein Ergebnis der Wortverarbeitung mit dem Ergebnis der vorangegangenen Binärverarbeitung zu verknüpfen.

In der Druckschrift "Automatisieren mit SIMATIC S5-115U", Hans Berger, 1991, ist in Kapitel 2 beschrieben, daß ein Verknüpfungsergebnis VKE einer binären Verknüpfung im Bitprozessor abgespeichert wird und zur weiteren Verarbeitung zur Verfügung steht. Besteht eine Anweisungsliste aus mehreren aufeinanderfolgenden binären Verknüpfungsanweisungen, so werden diese der Reihe nach vom Bitprozessor abgearbeitet. Das aus einer Verknüpfung resultierende Verknüpfungsergebnis wird zunächst im Bitprozessor abgespeichert und mit dem Abfrageergebnis der nächsten Anweisung verknüpft, usw. Das vor der Bearbeitung der nächsten Anweisung im Flag-Register des Bitprozessors abgespeicherte Verknüpfungsergebnis wird nach der Bearbeitung dieser Anweisung gelöscht und durch das neue Verknüpfungsergebnis ersetzt. In Kapitel 3 der genannten Druckschrift ist auf Seite 108 die Bearbeitung einer sogenannten Vergleichsfunktion beschrieben. Mit der Vergleichsfunktion werden zwei digitale Werte miteinander verglichen. Das Ergebnis dieser Wortverarbeitung beeinflußt das binäre Verknüpfungsergebnis, was bedeutet, daß der vorherige Inhalt des Flag-Registers des Bitprozessors verändert wird und für eine weitere Verarbeitung nicht mehr zur Verfügung steht. Dieser vorherige Inhalt des Flag-Registers kann dadurch "gerettet" werden, wenn er zuvor in einem besonderen Speicherbereich (Merker) auf der Zentralbaugruppe hinterlegt wurde. Mit einem entsprechenden Programm ist es nun möglich, diesen Speicherbereich auszulesen und den Inhalt für eine weitere Verarbeitung bereitzustellen. Diese Maßnahmen wirken sich allerdings während des Betriebs der speicherprogrammierbaren Steuerung störend auf die Verarbeitungsgeschwindigkeit aus.

Aus der PCT-Veröffentlichung WO 89/02099 ist ein Verfahren zum Betrieb einer speicherprogrammierbaren Steuerung und eine Einrichtung zur Durchführung des Verfahrens bekannt, das bzw. die innerhalb eines Programms, durch das eine vorgegebene Gesamtmenge von Eingangssignalen logisch miteinander verknüpft wird, gleichzeitig vorgebbare Teilmengen von Eingangssignalen miteinander verknüpft und in Abhängigkeit vom Verknüpfungsergebnis dieser Teilmengen Ausgangssignale erzeugt.

Aus der europäischen Patentanmeldung EP-A-174 230 ist eine speicherprogrammierbare Steuerung mit einem Booleschen Prozessor bekannt. Anweisungen eines Befehlsvorrates führen logische Verknüpfungen von zwei in einem Speicher hinterlegten Werten aus. Weitere Befehle dieses Befehlsvorrats verarbeiten die Eingangsvariablen eines Prozeßabbildes.

Der vorliegenden Erfindung liegt die Aufgabe zugrunde, eine speicherprogrammierbare Steuerung der eingangs genannten Art zu schaffen, die eine Verknüpfung eines Ergebnisses einer Wortverarbeitung mit einem Ergebnis einer vorangegangenen Binärverarbeitung vereinfacht.

Diese Aufgabe wird durch die im kennzeichnenden Teil des Anspruchs 1 angegebenen Maßnahmen gelöst.

In einer bevorzugten Ausführungsform gemäß den Merkmalen des Anspruchs 2 wird das Verknüpfungsergebnis in das zweite Flag-Register durch die Bearbeitung an sich bekannter binärer Verknüpfungsbefehle des Bitprozessors hinterlegt.

Weitere vorteilhafte Ausgestaltungen der Erfindung ergeben sich aus den weiteren Unteransprüchen.

Anhand der Zeichnung, in der ein Ausführungsbeispiel der Erfindung dargestellt ist, wird die Erfindung näher erläutert.

Es zeigen
- Figur 1: ein Blockschaltbild einer speicherprogrammierbaren Steuerung und
- Figur 2: Steueranweisungen für eine speicherprogrammierbare Steuerung.

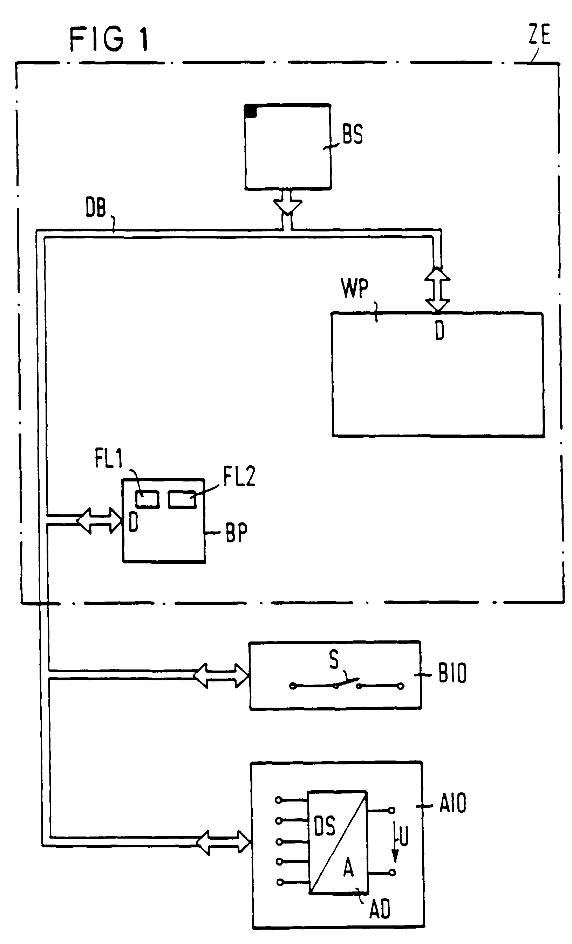

Die Darstellung gemäß Figur 1 zeigt in Form eines Blockschaltbildes die einzelnen Elemente einer speicherprogrammierbaren Steuerung. Diese besteht aus einer Zentraleinheit ZE, die in der Zeichnung durch eine gestrichelte Kontur zusammengefaßt ist und über einen gemeinsamen Datenbus DB mit Binärsignalein-/-ausgabebaugruppen BIO und einer Analogwertein-/-ausgabebaugruppe AIO verbunden ist. Die Zentraleinheit ZE besteht im wesentlichen aus einem Befehlsspeicher BS, einem Wortprozessor WP und aus einem mit einem ersten und einem zweiten Flag-Register FL1, FL2 versehenen Bitprozessor BP. Die Prozessoren WP, BP und der Befehlsspeicher BS sind an den gemeinsamen Datenbus DB angeschlossen, dessen Datenflußrichtung, wie bei Bussystemen üblich, durch Pfeile gekennzeichnet ist. Die Datenanschlüsse D des Wortprozessors WP sowie die Datenanschlüsse D des Bitprozessors BP sind direkt mit dem Datenbus DB verbunden. Als Binärsignale erzeugende Elemente sind in den Ein-/Ausgabebaugruppen BIO Schalter S vorgesehen. Die Analogwertein-/-ausgabebaugruppe AIO enthält einen Analog-/ Digital-Wandler AD, dessen Analogsignaleingang A an einer Spannungsquelle (Spannung U durch Pfeil angedeutet) angeschlossen ist.

Der Übersichtlichkeit halber wurde auf die Darstellung von Decodierelementen, welche die Wortbreite des Datenbusses DB für den Bitprozessor BP verringern, verzichtet. Gleiches gilt für ein gemeinsames Adreßbussystem und einen Programmzähler, mit welchen der Befehlsspeicher BS vom Wortprozessor WP und/ oder vom Bitprozessor BP adressiert werden kann, wodurch die entsprechenden Ein-/Ausgabebaugruppen von den Prozessoren WP, BP angesprochen werden können.

Der Befehlsspeicher BS kann ein herkömmlicher Speicherbaustein sein, dessen Wortbreite den Erfordernissen des Wortprozessors WP bzw. des Bitprozessors BP angepaßt ist. Der Wortprozessor WP kann ein herkömmlicher Standort-Mikroprozessor sein, wie z. B. aus der Beschreibung "SIMATIC S5 - Automatisierungsgerät S5-135", Ausgabe 05, 1990, bekannt.

Der Bitprozessor BP kann ein kundenspezifisches Binärschaltwerk sein; es könnte aber auch ein modifiziertes Binärschaltwerk verwendet werden, das so geändert sein müßte, daß zusätzlich zu dem ersten Flag-Register FL1 ein zweites Flag-Register FL2 vorhanden ist. Die Schalter S der Binärein-/-ausgabebaugruppen BIO können mechanischer, elektromechanischer oder elektronischer Art sein. Für die Analogwertein-/-ausgabebaugruppe AIO kann beispielsweise ein gewöhnlicher Analog-/ Digital-Wandler AD verwendet werden.

Durch die Binärein-/-ausgabebaugruppen BIO werden die Schalterstellungen des jeweiligen Schalters S abgefragt oder verändert. Die Analogwertein-/-ausgabebaugruppe AIO dient zur Eingabe und Ausgabe von digitalisierten Analogsignalen, die im folgenden mit "Analogwerte" bezeichnet werden. In der Zeichnung ist die Eingabe von Analogwerten dargestellt, die durch einen Analog-/Digital-Wandler AD erzeugt werden, dessen Digitalsignalausgang DS mit dem Datenbus DB verbunden ist. Die Breite des Datenbusses DB ist im wesentlichen durch die Wortbreite des Wortprozessors WP vorgesehen. Übliche Wortbreiten sind beispielsweise 8 Bit, 16 Bit oder 32 Bit. Mit dem Analog-/Digital-Wandler AD wird beispielsweise eine Spannung U, die am Analogsignaleingang A des Analog-/Digital-Wandlers AD anliegt, in einen Digitalwert umgesetzt, den der Wortprozessor WP über den Datenbus DB abfragt.

Beim Steuervorgang werden die im Befehlsspeicher BS abgelegten Befehle, die durch das Steuerprogramm vorgegeben sind, ausgelesen und über den Datenbus DB dem Wortprozessor WP und dem Bitprozessor BP zugeführt. Wie beim Stand der Technik üblich, erkennen die Prozessoren WP, BP anhand der Struktur der Befehle, welche für sie vorgesehen sind. Zur Befehlsausführung kommunizieren beide Prozessoren WP, BP mit der für sie zuständigen peripheren Ein-/Ausgabebaugruppe AIO, BIO über den Datenbus DB. Dabei ist der Bitprozessor BP für die Binärein-/-ausgabebaugruppe BIO und der Wortprozessor WP für die Analogwertein-/-ausgabebaugruppe AIO zuständig.

Der Bitprozessor BP ist in der Lage, binäre Funktionen auszuführen, wie z. B. aus der Druckschrift "Automatisieren mit SIMATIC S5-115U", Hans Berger, 1991, bekannt. Ergebnisse einer binären Verknüpfung werden an die Binärein-/-ausgabebaugruppen BIO ausgegeben, um dort entsprechende Schalterstellungen, gegebenenfalls auch Ventilstellungen etc., zu bewirken. Gewöhnlich wird bei industriellen Steuerungen eine Änderung einer Schalter- bzw. Ventilstellung der Abfrage aller relevanten Binär- und Schaltelemente der technischen Einrichtung durch den Bitprozessor BP vorausgehen.

Der Wortprozessor WP kann ebenfalls mit der ihm zugewiesenen Analogein-/-ausgabebaugruppe AIO kommunizieren. Der Wortprozessor verarbeitet z. B. digitale Funktionen, die ebenfalls in der genannten Druckschrift beschrieben sind.

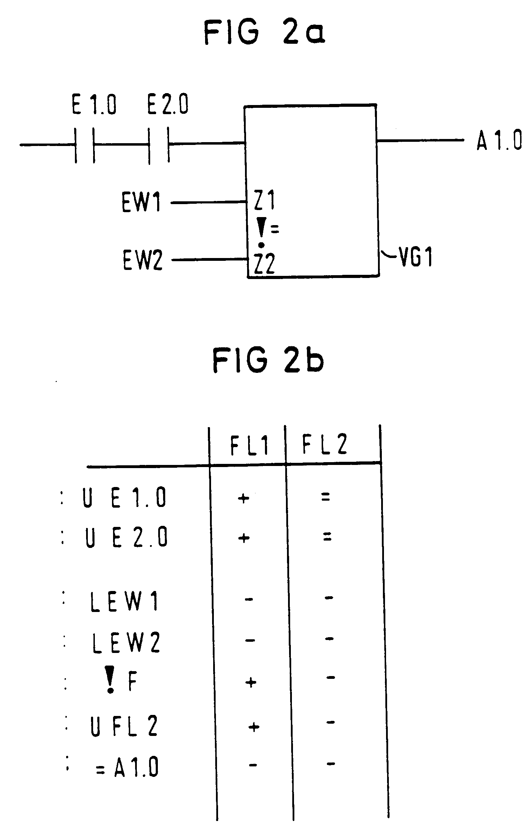

Zur Verdeutlichung einer einfachen Verknüpfung zwischen einem Ergebnis einer Wortverarbeitung mit einem Ergebnis einer vorangegangenen Binärverarbeitung wird auf Figur 2 verwiesen, welche Steueranweisungen einer speicherprogrammierbaren Steuerung zeigt, wobei Figur 2a die Steueranweisungen in einer an sich bekannten Kontaktplandarstellung und Figur 2b in einer bekannten Anweisungsliste darstellt. Die in den Figuren 1 und 2 gleichen Teile sind mit gleichen Bezugszeichen versehen. Es bedeuten E1.0 und E2.0 Binärsignale der Binärein-/-ausgabebaugruppen BIO und EW1, EW2 Analogwerte der Analogwertein-/-ausgabebaugruppe AIO und A1.0 ein Ausgangssignal, das der Bitprozessor BP einer der Binärein-/-ausgabebaugruppen BIO aufschaltet. Eine UND-Verknüpfung ist in Figur 2b mit "U" bezeichnet. Eine Ladeoperation eines Wertes ist mit "L", eine Vergleichsoperation, die zwei Werte an den Eingängen Z1, Z2 eines Vergleichers VG auf Gleichheit überprüft, mit "!F" bezeichnet. Das Steuerprogramm schreibt zunächst vor, die Signale E1.0 und E2.0 der Binärein-/-ausgabebaugruppen BIO der Reihe nach abzufragen und das Ergebnis der Abfragung nach UND zu verknüpfen. Der vorige Inhalt des ersten Flag-Registers FL1 und das Ergebnis dieser Binärverarbeitung ist im Flag-Register FL1 gespeichert. Das Zeichen "+" in der Figur bedeutet, daß eine gerade durchgeführte Operation den Inhalt dieses Flag-Registers verändert. Der Inhalt des Flag-Registers FL2 entspricht im gezeigten Beispiel bei binären Verknüpfungen dem Inhalt des ersten Flag-Registers FL1 und ist in Figur 2b mit dem Zeichen "=" dargestellt. Nach dieser Binärverknüpfung werden entsprechend den Vorgaben des Steuerprogramms die Analogwerte EW1 und EW2 der Analogwertein-/-ausgabebaugruppe in hier nicht dargestellte Akkumulatoren des Wortprozessors WP geladen und durch die Anweisung "!F" auf Gleichheit überprüft. Die Ladeanweisungen beeinflussen die Flag-Register FL1, FL2 nicht, was in der Figur mit "-" gekennzeichnet ist. Jedoch wird der Inhalt des Flag-Registers FL1 entsprechend dem Vergleichsergebnis verändert. Das Ergebnis dieses Vergleiches ist binär, wobei für den Fall, daß der Inhalt "1" ist, der Vergleich erfüllt und für den Fall, daß der Inhalt "0" ist, der Vergleich nicht erfüllt ist. Das Ergebnis dieser Wortverarbeitung, also das Vergleichsergebnis, wird nun mit dem Ergebnis der vorangegangenen Binärverarbeitung dadurch verknüpft, daß der Bitprozessor BP die Inhalte der beiden Flag-Register FL1, FL2 aufgrund der Anweisung UFL2 im Steuerprogramm zunächst ausliest und dann verknüpft. Das Ergebnis dieser Verknüpfung steht im ersten Flag-Register FL1, und ein diesem Inhalt entsprechendes Signal A1.0 wird einer der Binärein-/-ausgabebaugruppen BIO über den Datenbus DB zugeführt. Es ist nicht unbedingt erforderlich, daß der Bitprozessor BP die Verknüpfung der beiden Ergebnisse der Binär- und Wortverarbeitung bewirkt, sondern es ist auch möglich, den Wortprozessor so auszubilden, daß dieser die Verarbeitung ausführt.

Im aufgeführten Beispiel beeinflußt die Binärverknüpfung der Signale E1.0 und E2.0 sowohl das erste als auch das zweite Flag-Register FL1, FL2. Es ist selbstverständlich möglich, den Bitprozessor und/oder den Wortprozessor derart auszubilden, daß diese(r) das zweite Flag-Register FL2 auch bei anderen Befehlen, z. B. Sprung- oder Speicherbefehlen, beeinflußt und mit diesen Befehlen den vor Ausführung dieser Befehle jeweiligen aktuellen Inhalt des ersten Flag-Registers in das zweite überträgt.

## Patentansprüche

1. Speicherprogrammierbare Steuerung mit mindestens einem Befehlsspeicher (BS), der über mindestens ein Bussystem (DB) mit einem Wortprozessor (WP) und einem Bitprozessor (BP) der Steuerung verbunden ist und der Befehle für den Betrieb der speicherprogrammierbaren Steuerung speichert, wobei der Wortprozessor (WP) für die Wortverarbeitung und der Bitprozessor (BP) für die Bitverarbeitung vorgesehen ist,
**dadurch gekennzeichnet,**
- daß der Bitprozessor (BP) mindestens zwei Flag-Register (FL1, FL2) aufweist, von denen das erste (FL1) das binäre Verknüpfungsergebnis einer Binärverarbeitung speichert und das zweite (FL2) dieses Verknüpfungsergebnis für den Fall speichert, daß der Bit- oder Wortprozessor (BP, WP) einen dafür vorgesehenen, im Befehlsspeicher (BS) hinterlegten ersten Befehl bearbeitet, und
- daß der Bit- oder Wortprozessor (BP, WP) mit einem im Befehlsspeicher (BS) hinterlegten zweiten Befehl das zweite Flag-Register (FL2) ausliest und das Verknüpfungsergebnis der Binärverarbeitung verarbeitet.

2. Speicherprogrammierbare Steuerung nach Anspruch 1, **dadurch gekennzeichnet,**
- daß der erste Befehl ein durch den Bitprozessor (BP) zu bearbeitender binärer erster Verknüpfungsbefehl (UE1.0, UE2.0) ist.

3. Speicherprogrammierbare Steuerung nach Anspruch 1, **dadurch gekennzeichnet,**
- daß der erste Befehl ein durch den Wortprozessor (WP) zu bearbeitender Speicherbefehl ist.

4. Speicherprogrammierbare Steuerung nach Anspruch 1, **dadurch gekennzeichnet,**
- daß der erste Befehl ein durch den Wortprozessor (WP) zu bearbeitender Sprungbefehl ist.

5. Speicherprogrammierbare Steuerung nach einem der Ansprüche 1 bis 4, **dadurch gekennzeichnet,**
- daß der zweite Befehl ein durch den Bitprozessor (BP) zu bearbeitender zweiter Verknüpfungsbefehl (UFL2) ist.

6. Speicherprogrammierbare Steuerung nach einem der Ansprüche 1 bis 4, **dadurch gekennzeichnet,**
- daß der zweite Befehl ein durch den Wortprozessor (WP) zu bearbeitender zweiter binärer Verknüpfungsbefehl ist.

## Claims

1. Stored-program control having at least one instruction memory (BS), which is connected by way of at least one bus system (DB) to a word processor (WP) and a bit processor (BP) of the control and stores instructions for the operation of the stored-program control, with the word processor (WP) being provided for the word processing operation and the bit processor (BP) being provided for the bit processing operation, characterised in that
- the bit processor (BP) has at least two flag registers (FL1, FL2), of which the first (FL1) stores the binary combination result of a binary processing operation and the second (FL2) stores this combination result in case the bit processor (BP) or word processor (WP) processes a first instruction which is provided therefor and is stored in the instruction memory (BS); and in that
- the bit processor (BP) or word processor (WP) reads out the second flag register (FL2) with a second instruction which is stored in the instruction memory (BS) and processes the combination result of the binary processing operation.

2. Stored-program control according to claim 1, characterised in that the first instruction is a first binary combination instruction (UE1.0, UE2.0) which is to be processed by the bit processor (BP).

3. Stored-program control according to claim 1, characterised in that the first instruction is a memory instruction which is to be processed by the word processor (WP).

4. Stored-program control according to claim 1, characterised in that the first instruction is a jump instruction which is to be processed by the word processor (WP).

5. Stored-program control according to one of the claims 1 to 4, characterised in that the second instruction is a second combination instruction (UFL2) which is to be processed by the bit processor (BP).

6. Stored-program control according to one of the claims 1 to 4, characterised in that the second instruction is a second binary combination instruction which is to be processed by the word processor (WP).

## Revendications

1. Commande par programme enregistré, comportant au moins une mémoire d'instructions (BS), qui est reliée par l'intermédiaire d'au moins un système de bus (DB) à un processeur de mots (WP) et à un processeur de bits (BP) de la commande et qui mémorise des instructions pour le fonctionnement de la commande par programme enregistré, le processeur de mots (WP) étant prévu pour le traitement de mots et le processeur de bits (BP) est prévu pour le traitement de bits,
caractérisée par le fait que
- le processeur de bits (BP) comporte au moins deux registres indicateurs (FL1, FL2) parmi lesquels le premier (FL1) mémorise le résultat binaire de combinaison d'un traitement binaire et le second (FL2) mémorise ce résultat de combinaison dans le cas où le processeur de bits (BP) ou le processeur de mots (WP) traite une première instruction prévue à cet effet et mémorisée dans la mémoire d'instructions (BS), et
- le processeur de bits (BP) ou le processeur de mots (WP) lit par une seconde instruction mémorisée dans la mémoire d'instructions (BS) le second registre indicateur (FL2) et traite le résultat de combinaison du traitement binaire.

2. Commande par programme enregistré selon la revendication 1, caractérisée par le fait que
- la première instruction est une première instruction de combinaison (UE1.0, UE2.0) binaire à traiter par le processeur de bits (BP).

3. Commande par programme enregistré selon la revendication 1, caractérisée par le fait que
- la première instruction est une instruction de mémorisation à traiter par le processeur de mots (WP).

4. Commande par programme enregistré selon la revendication 1, caractérisée par le fait que
- la première instruction est une instruction de saut à traiter par le processeur de mots (WP).

5. Commande par programme enregistré selon l'une des revendications 1 à 4, caractérisée par le fait que
- la seconde instruction est une seconde instruction de combinaison (UFL2) à traiter par le processeur de bits (BP).

6. Commande par programme enregistré selon l'une des revendications 1 à 4, caractérisée par le fait que
- la seconde instruction est une seconde instruction de combinaison binaire à traiter par le processeur de mots (WP).
